# EUROPEAN PATENT SPECIFICATION

(11) **EP 3 432 469 B1**
(45) Date of publication and mention of the grant of the patent: **20.01.2021**
(21) Application number: 16894010.4
(22) Date of filing: 10.05.2016
(51) Int. Cl.: H02S 20/20, H02S 20/30, H02S 10/40, F24S 30/00

(54) **PHOTOVOLTAIC ECOLOGICAL GREENHOUSE AND PHOTOVOLTAIC MODULE UNIT THEREOF**
FOTOVOLTAISCHES ÖKOLOGISCHES GEWÄCHSHAUS UND FOTOVOLTAIKMODULEINHEIT DAVON
SERRE ÉCOLOGIQUE PHOTOVOLTAÏQUE ET UNITÉ DE MODULE PHOTOVOLTAÏQUE ASSOCIÉE

(30) Priority: 15.03.2016 CN 201610146103
(43) Date of publication of application: 23.01.2019
(73) Proprietor: Suzhou Talesun Solar Technologies Co., Ltd., Suzhou, Jiangsu 215542 (CN)
(72) Inventor: WANG, Baixing, Suzhou, Jiangsu 215542 (CN); NI, Paul, Suzhou, Jiangsu 215542 (CN); XU, Zhixiang, Suzhou, Jiangsu 215542 (CN); HU, Yayi, Suzhou, Jiangsu 215542 (CN); YAN, Yu, Suzhou, Jiangsu 215542 (CN)
(74) Representative: Rössler, Matthias
(86) International application number: PCT/CN2016/081539
(87) International publication number: WO 2017/156847

(56) References cited:
- WO-A2-2014/168464
- CN-A- 105 594 512
- CN-U- 203 968 803
- CN-U- 204 579 326
- CN-U- 204 615 731
- CN-U- 204 929 840
- DE-A1-102009 002 504
- US-A1- 2008 040 990
- US-A1- 2011 253 214
- US-A1- 2014 284 292
- US-A1- 2015 319 938

## Description

### Field of the Invention

The present invention relates to the field of photovoltaic ecology, in particular to a photovoltaic ecological greenhouse and its photovoltaic module unit.

### Background of the Invention

According to the irradiation amount required by plants at different time, the number of photovoltaic module units on a photovoltaic ecological greenhouse can be adjusted accordingly, and the excess photovoltaic module units can be stored into a warehouse or the insufficient photovoltaic module units can be transferred from the warehouse. This requires that the photovoltaic module units can be folded conveniently. During the storage, the photovoltaic module units are folded and stacked for storage, thus reducing the storage volume and saving the warehouse space.

WO2014/168464 A2 relates to a device which comprises two platforms of a photovoltaic panel pivotably linked about the shaft, which are raised vertically by a rod cylinder secured to the shaft and four wheels allowing the two platforms to slide on rails, thus creating an angle of inclination of the platforms.

US2014/284292 A1 discloses photovoltaic panel support system including a surface frame and a support frame. The surface frame may be mounted to a surface. The support frame may be attached to the surface frame and may support photovoltaic panels. The panel may further include a plurality of vertical posts. Each vertical post may include a top end and a bottom end. The top end may connect with the support frame and the bottom end is supported by at least one of the surface frame and the surface. At least a portion of the plurality of vertical posts includes a wheel on the bottom end.

Although the above mentioned photovoltaic panels are designed to be movable on the ground, the problems of an easy, effective, stable, adaptable and/or movable energy convey mechanism for transferring the energy of the photovoltaic devices to a central electric port is not addressed.

It is an object to solve the outlined problems.

### Summary of the Invention

In order to achieve the above objective, the present invention provides a photovoltaic ecological greenhouse, and a support frame thereof that is foldable and stackable for storage, thus saving the warehouse space.

In order to solve the above technical problems, the technical solution adopted by the present invention is defined by the features of Claim 1.

A photovoltaic module unit for a photovoltaic ecological greenhouse comprises a support for mounting on a supporting frame of a photovoltaic power station or a photovoltaic ecological greenhouse; and a photovoltaic module provided on said support, wherein the support comprises a bottom support and a vertical telescopic support provided on a side of the bottom support, and a side of the photovoltaic module and an upper end of the telescopic support are slidably and rotatably connected, and the other side of the photovoltaic module and the other side of the bottom support are rotatably connected.

The photovoltaic module unit further comprises a conveying mechanism, the conveying mechanism is provided with a first contact point for contact and electrical connection with the supporting frame, and the first contact point is provided on the lower part of the support and is electrically connected with the photovoltaic module to output the electric energy of the photovoltaic module.

Preferably, the telescopic support comprises a support telescoping sleeve fixedly connected to the bottom support, a support telescoping rod vertically slidably connected to the support telescoping sleeve, and a hydraulic drive mechanism provided between the support telescoping sleeve and the support telescoping rod. The support telescoping rod is connected with the photovoltaic module.

More preferably, the support telescoping rod is connected with the photovoltaic module through a second-stage support telescoping rod, the second-stage support telescoping rod is connected with the support telescoping rod in a vertically slidable manner, and a second-stage hydraulic drive mechanism is disposed between the second-stage support telescoping rod and the support telescoping rod.

More preferably, the hydraulic drive mechanism is a hydraulic oil cylinder.

More preferably, the conveying mechanism further comprises a hollow insulating shell fixedly connected to the lower part of the support, and a metal contact movably disposed in the insulating shell, the first contact point is formed on one end of the metal contact, the other end of the metal contact is electrically connected with the photovoltaic module through a first conducting wire, a through hole for enabling the first contact point to protrude is provided on one end of the insulating shell, a through hole for enabling the first conducting wire to protrude is provided on the other end of the insulating shell, and an elastic member for providing an elastic force for enabling the contact to protrude is disposed between the insulating shell and the metal contact.

Another technical solution adopted by the present invention is as follows:
A photovoltaic ecological greenhouse comprises a supporting frame disposed on the ground to form a support, and a plurality of photovoltaic module units disposed on the supporting frame, and the photovoltaic module unit is any of the above-mentioned photovoltaic module units.

Preferably, the supporting frame is provided with a frame for mounting the photovoltaic module unit, and the bottom support of the photovoltaic module unit is slidably and detachably disposed on the frame.

More preferably, the frame is provided with guide rails, a guide groove is provided on the guide rail, a slider is disposed on the lower part of the bottom support, and the slider is slidably inserted into the guide groove.

Further, the conveying mechanism comprises a second contact point provided on the guide rail, the second contact point is electrically connected with a second conducting wire, a sliding slot is provided on the guide rail, and the second contact point is provided on the bottom of the sliding slot, and the conveying mechanism further comprises a hollow insulating shell fixedly disposed on the lower part of the support, and a metal contact movably disposed in the insulating shell, the first contact point is formed on one end of the metal contact, the other end of the metal contact is electrically connected with the first conducting wire, a through hole for enabling the first contact point to protrude is formed at one end of the insulating shell, a through hole for enabling the first conducting wire to protrude is formed at the other end of the insulating shell, an elastic member for driving the metal contact to move is disposed between the metal contact and the insulating shell, and when the photovoltaic module unit is installed in place, the metal contact is inserted into the sliding slot, and the first contact point comes into contact and electrical connection with the second contact point.

As the present invention adopts the above technical solutions, compared with the prior art, the present invention has the following advantages: the telescopic support is capable of vertically extending and shrinking, when the telescopic support retracts downward, a side of the photovoltaic module descends and becomes flush with the other side, that is, the photovoltaic module lies down, so that the photovoltaic module units can be folded and can be stacked mutually during the storage, thereby reducing the storage volume and saving the warehouse space.

### Brief Description of the Drawings

Fig.1 is a schematic diagram of a three-dimensional structure of a photovoltaic ecological greenhouse of the present invention;
Fig.2 is a top view of a photovoltaic ecological greenhouse of the present invention;
Fig.3 is a partial front view of a photovoltaic ecological greenhouse of the present invention;
Fig.4 is a connection schematic diagram at position A in Fig.3;
Fig.5 is a partial side view of a photovoltaic ecological greenhouse of the present invention;
Fig.6 is a connection schematic diagram at position A in Fig.5;
Fig.7 is a schematic diagram of a folded photovoltaic module unit of the present invention;
Fig.8 is a schematic diagram of an unfolded photovoltaic module unit of the present invention;
Fig.9 is a structural schematic diagram of a conveying mechanism of the present invention;
Fig.10 is a schematic diagram of a sliding slot of the present invention;
Fig.11 is a working schematic diagram of a metal contact in a sliding slot of the present invention;
Fig.12 is a modular schematic diagram of a control device of the present invention;
Fig.13 is a flowchart of a control method of the present invention.

Reference signs:
1, supporting frame; 11, column; 111, column telescoping sleeve; 112, column telescoping rod; 113, hydraulic drive mechanism of the column; 12, transverse guide rail; 120, transverse guide groove; 13, longitudinal guide rail; 130, longitudinal guide groove; 14, module placement position; 15, conveying unit; 16, sliding slot; 160, second contact point; 161, guide bevel; 162, guide bevel; 17, second conducting wire; 170, second connector;
2, photovoltaic module unit; 20, photovoltaic module; 21, support;
210, insulating shell; 211, metal contact; 2110, first contact point; 212, first conducting wire; 213, first connector; 214, compression spring;
22, bottom support; 220, slider; 23, telescopic support; 231, support telescoping sleeve; 232, support telescoping rod; 233, hydraulic drive mechanism of the telescopic support;
3, module stacking warehouse;
4, maintenance warehouse;
5, transmission device; 51, first conveying segment; 52, second conveying segment; 53, third conveying segment; 54, module lifting mechanism;
60, controller; 61, environmental detector; 62, third party data platform; 63, soil humidity tester.

### Detailed Description of the Embodiments

The preferred embodiments of the present invention are described in detail below with reference to the accompanying drawings in order to make the advantages and features of the present invention more readily understood by those skilled in the art.

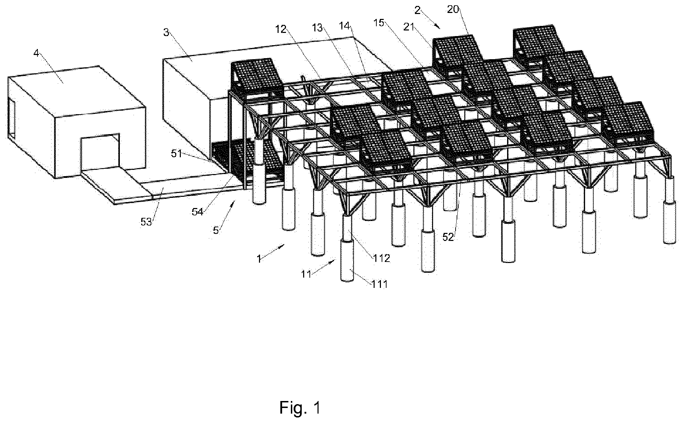

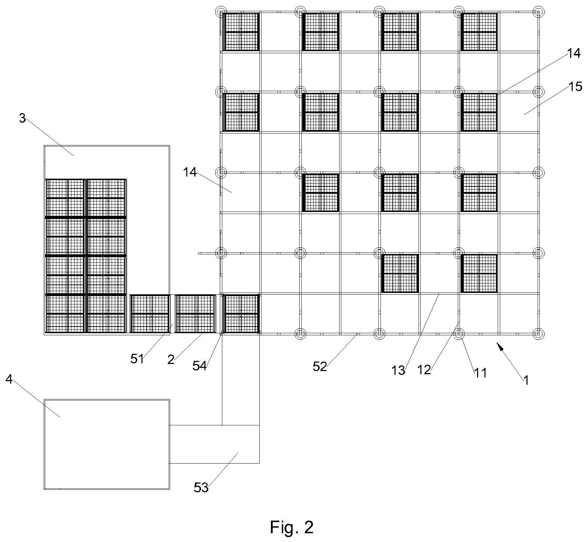

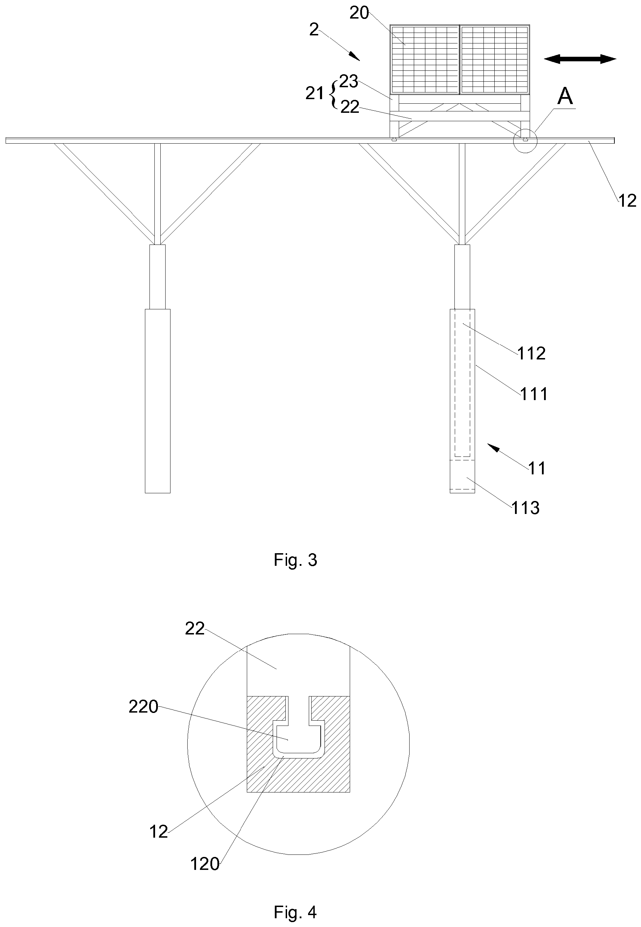

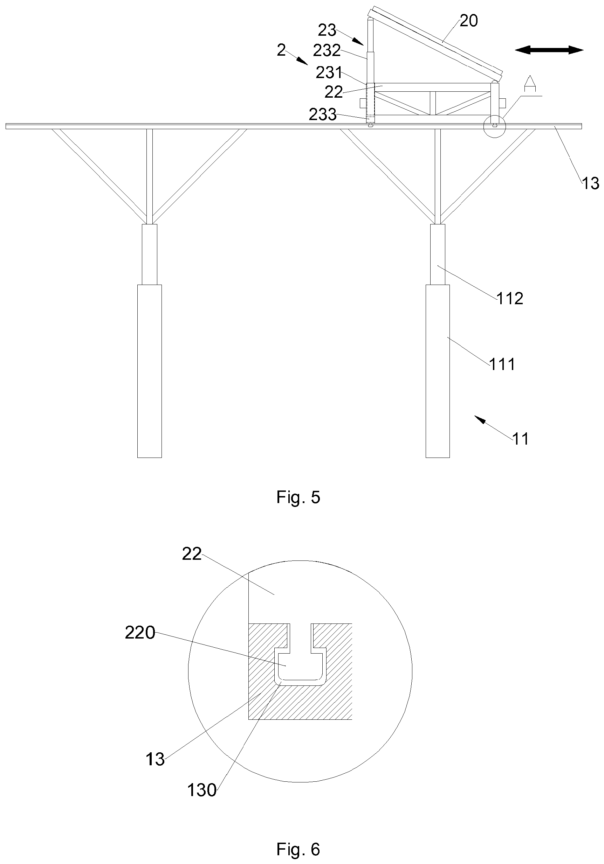

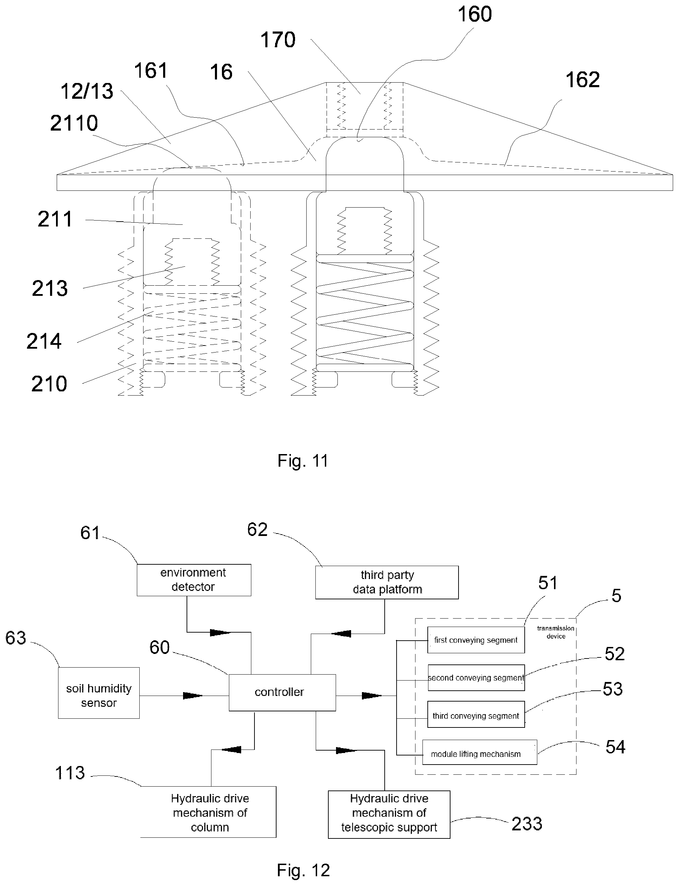

As shown in Figs.1 to 12, a photovoltaic ecological greenhouse comprises a supporting frame 1, photovoltaic module units 2 disposed on an upper end of the supporting frame 1, a module stacking warehouse 3 disposed beside the supporting frame 1, a maintenance warehouse 4 disposed beside the module stacking warehouse 3, a transmission device 5 for transporting the photovoltaic module units 2, and a control mechanism for adjusting the number of the photovoltaic module units 2.

The supporting frame 1 comprises a plurality of columns 11 arranged in an array, and a frame fixedly connected to the upper ends of all columns 11. The column 11 is of a telescoping rod type, that is, each column 11 comprises an column telescoping sleeve 111, a column telescoping rod 112 connected with the column telescoping sleeve 111 in a vertically slidable manner, and a hydraulic drive mechanism 113 (such as a hydraulic oil cylinder or the like) disposed between the column telescoping sleeve 111 and the column telescoping rod 112 and used for driving the column telescoping rod 112 to slide up and down relative to the column telescoping sleeve 111. The lower end of the column telescoping sleeve 111 is fixedly installed on the ground to form a stable support, and the upper end of the column telescoping rod 112 is fixedly connected with the frame. The frame comprises a plurality of transverse guide rails 12 arranged along the longitudinal direction at equal intervals and extending along the transverse direction respectively, and a plurality of longitudinal guide rails 13 arranged along the transverse direction at equal intervals and extending along the longitudinal direction respectively, the plurality of transverse guide rails 12 and the plurality of longitudinal guide rails 13 intersect each other to form a plurality of rectangular frame units arranged in an array, some of the frame units are used as module placement positions 14 for installing the photovoltaic module, the other frame units are used as conveying units 15 constituting a conveying channel of the photovoltaic module unit, and any two adjacent module placement positions 14 are spaced by a conveying unit 15. A connection mechanism, a conveying mechanism as described below, for mechanical connection and/or power transmission with the photovoltaic module unit is disposed on the module placement position 14. A connection mechanism, a transverse guide groove and a longitudinal guide groove and the like as described below, in slide fit with a first conveying segment as described below is disposed on the conveying unit 15.

The photovoltaic module unit 2 comprises a support 21 and a photovoltaic module 20 disposed on an upper end of the support 21. The photovoltaic module 20 is a double-glass photovoltaic module, the main function of the photovoltaic module 20 is that solar cells of the photovoltaic module 20 convert solar energy into electric energy after being irradiated by the sunlight, and the electric energy is conveyed by a junction box of the photovoltaic module. The support 21 comprises a bottom support 22 and a telescopic support 23 disposed on the bottom support 22, the telescopic support 23 is disposed on a side of the bottom support 22, a side of the photovoltaic module 20 is connected with one side of the telescopic support 23, and the other side of the photovoltaic module 20 is connected with the other side of the bottom support 22.

The bottom support 22 is in slide fit connection with the frame. Particularly, a transverse guide groove 120 extending along the transverse direction is formed on the transverse guide rail 12, a longitudinal guide groove 130 extending along the longitudinal direction is formed on the longitudinal guide rail 13; and at the intersection of the transverse guide rail 12 and the longitudinal guide rail 13, that is, at the vertex of each frame unit, the transverse guide groove 120 and the longitudinal guide groove 130 are in communication with each other. The bottom of the bottom support 22 is provided with a slider 220 cooperating with the transverse guide groove 120 and the longitudinal guide groove 130, the slider 220 is slidably inserted into the transverse guide groove 120 or the longitudinal guide groove 130, and can enter the longitudinal channel 130 or the transverse channel 120 from the transverse channel 120 or the longitudinal channel 130 at the intersection of the transverse guide rail 12 and the longitudinal guide rail 13.

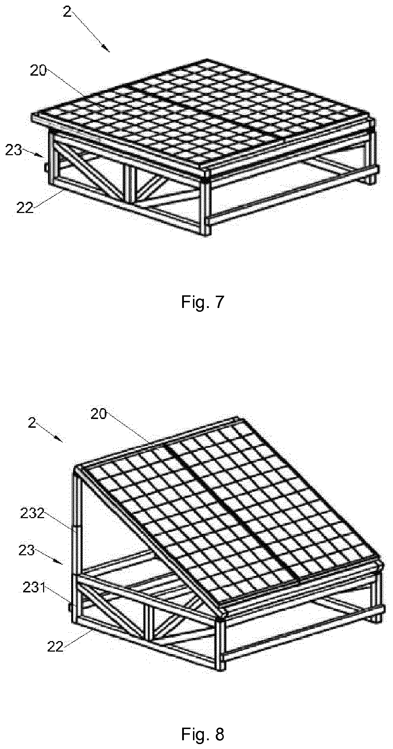

The telescopic support 23 comprises a support telescoping sleeve 231, a support telescoping rod 232 connected with the support telescoping sleeve 231 in a vertically slidable manner, and a hydraulic drive mechanism 233 (such as a hydraulic oil cylinder or the like) disposed between the support telescoping sleeve 231 and the support telescoping rod 232, and the hydraulic drive mechanism 233 drives the support telescoping rod 232 to slide up and down relative to the support telescoping sleeve 231. The lower end of the support telescoping sleeve 231 is fixedly connected with the bottom support 22, the upper end of the support telescoping rod 232 is movably connected with the frame of the photovoltaic module 20, particularly, the upper end of the support telescoping rod 232 is in slidable and rotatable connection with the frame of the photovoltaic module 20, the other side of the bottom support 21 is in rotatable connection (for example, pivotal connection or the like) with the frame of the photovoltaic module 20. When the support telescoping rod 232 protrudes, said one side of the photovoltaic module 20 is raised, and the photovoltaic module 20 is tilted, as shown in Fig.8. When the support telescoping rod 232 retracts back, said one side of the photovoltaic module 20 is lowered, and the photovoltaic module 20 leans against the bottom support 22, the photovoltaic module unit 2 comes into a folded state, as shown in Fig.7, facilitating stacking in a module stacking warehouse 3 to save space. In the embodiment, a secondary telescopic support is preferred, that is, the second-stage support telescoping rod can further be connected to the support telescoping rod 232 in a vertically slidable manner, a second-stage hydraulic drive mechanism for driving the secondary telescopic support to slide up and down relative to the support telescoping rod 232 is disposed between the secondary telescopic support and the support telescoping rod 232, and in this way, the stroke of the up and down sliding adjustment can be increased.

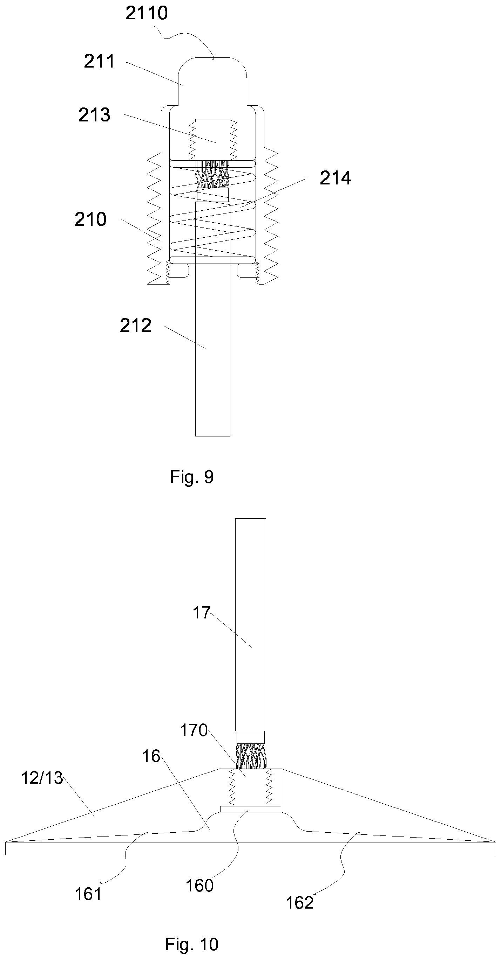

The photovoltaic module unit 2 further comprises a conveying mechanism disposed on a lower part of the support 21 for conveying the electric energy generated by the photovoltaic module 20. Referring to Figs.9 to 11, the conveying mechanism comprises a hollow insulating shell 210 fixedly disposed on the lower part of the support 21, and a metal contact 211 movably disposed in the insulating shell 210. One end of the metal contact 211 is provided with a first contact point 2110, and the other end of the metal contact is electrically connected with a first conducting wire 212. A through hole for enabling the first contact point 2110 to protrude is provided on one end of the insulating shell 210, and a through hole for enabling the first conducting wire 212 to protrude is provided on the other end. An elastic member for driving the metal contact 211 to slide relative to the insulating shell 210 is disposed between the metal contact 211 and the insulating shell 210, particularly, the other end of the insulating shell 210 is fixedly connected with a fastening ring piece, a compression spring 214 for driving the metal contact 211 to operate is disposed between the other end of the metal contact 211 and the metal ring piece, the compression spring 214 is in a compressed state to provide an elastic force for protrusion of the first contact point 2110. A first connector 213 is fixedly connected to one end of the first conducting wire 212, threads are provided on the first connector 213, a matched threaded hole is provided on the other end of the metal contact 211, and the first connector 213 is connected with the metal contact 211 through threads. The other end of the first conducting wire 212 is electrically connected with the junction box of the photovoltaic module 20. A plurality of guide grooves 16 matching the metal contact 211 are provided on the transverse guide rail 12 and/or the longitudinal guide rail 13 at intervals. A second contact point 160 matching with the first contact point 2110 is provided on the bottom of the sliding slot 16. Particularly, one end of a second conducting wire 17 is fixedly connected with a second connector 170, threads are provided on the second connector 170, the second connector 170 is connected with the transverse guide rail 12 and/or the longitudinal guide rail 13 through the threads, an end of the second connector 170 extends to the bottom of the sliding slot 16, the second contact point 160 is electrically connected with the second connector 170, and the other end of the second conducting wire 17 is connected with an external power grid. Said one end of the metal contact 211 is slidably inserted into the sliding slot 16, and when the first contact point 2110 and the second contact 160 are in contact and conductive with each other, the photovoltaic module unit 2 is installed in place, that is, arriving at a specified module placement position.

Guide bevels 161, 162 are provided in the sliding slot 16, and the guide bevels 161, 162 extend obliquely from the end of the sliding slot 16 toward the second contact point 160 in a manner of being gradually away from the support 21. Two guide bevels 161, 162 are provided and respectively located on two opposite sides of the second contact point 160. As the photovoltaic module unit 2 slides on the transverse guide rail 12 or the longitudinal guide rail 13, the metal contact 211 is inserted into the sliding slot 16, and under the action of the guide bevel 161 on one side, the compression spring 214 is gradually released to push the metal contact 211 to slide outward, and when metal contact moves to the second contact point 160, the first contact point 2110 and the second contact point 160 come into abutting contact with each other for conduction to achieve electrical connection, the photovoltaic module unit 2 is installed in place, and the electric energy generated by the photovoltaic module 20 is output by the first conducting wire 212 and the second conducting wire 17; and when the photovoltaic module unit 2 needs to be removed, the photovoltaic module unit 2 continues to move along the transverse guide rail 12 or the longitudinal guide rail 13, and under the action of the guide bevel 162 on the other side, the metal contact 211 gradually retracts back into the insulating shell 210, and the compression spring 214 is compressed.

The module stacking warehouse 3 is disposed on the ground beside the photovoltaic ecological greenhouse for storing the photovoltaic module units 2, so that it is convenient to replenish the photovoltaic module units 2 in the photovoltaic ecological greenhouse or recycle the redundant photovoltaic module units 2. After being folded, the photovoltaic module units 2 are stacked in the module stacking warehouse 3, thus reducing the storage volume and saving the warehouse space.

The maintenance warehouse 4 is disposed on the ground beside the module stacking warehouse 3 for recycling the faulty photovoltaic module units 2 for maintenance.

The transmission device 5 is composed of a module conveying mechanism and a module lifting mechanism 54. Particularly, the frame unit located at a vertex of the frame is used as a feeding/discharging point, the conveying mechanism comprises a first conveying segment 51, a second conveying segment 52 and a third conveying segment 53, the first conveying segment 51 extends from the module stacking warehouse 3 to a position under the feeding/discharging point, the second conveying segment 52 is disposed on the conveying units 15 of the frame to communicate the conveying units 15 with the feeding/discharging point, and the third conveying segment 53 extends from the maintenance warehouse 4 to a position under the feeding/discharging point. The module lifting device is disposed below the feeding/discharging point for conveying the photovoltaic module on the first conveying segment 51 to the feeding/discharging point or conveying the photovoltaic module of the feeding/discharging point to the first conveying segment 51 or the second conveying segment 52. The first conveying segment 51, the second conveying segment 52 and the third conveying segment 53 of the conveying device utilize belt conveying mechanisms or chain conveying mechanisms or the like in the prior art, and the module lifting device utilizes a pneumatic or electric lifting platform or the like in the prior art, and thus will not be described in detail herein.

A control device is formed by the module stacking warehouse 3, the maintenance warehouse 4, the transmission device 5, the hydraulic drive mechanism 113 of the column 11, the hydraulic drive mechanism 233 of the telescopic support 23, an environment detector 61, a soil humidity tester 63 and a controller 60, and is the control center for the operation of the entire photovoltaic ecological greenhouse. The controller 60 is the core part of the control device. The environment detector 61 is used for detecting the solar irradiation amount and the air moisture in the area on that day, and the soil humidity tester 63 is used for detecting the moisture content of the soil below the photovoltaic module on that day. The controller 60 is a PLC controller 60 or the like which is common in the prior art. The controller 60, the environment detector 61 and the soil humidity tester 63 are electrically connected by conducting wires, or connected in a wired transmission manner to obtain the solar irradiation amount and the air moisture content of the area on that day and the moisture content of the soil under the photovoltaic module on that day, the controller 60 is also connected with a third party data platform 63 to obtain a wide range of meteorological data of the area on that day to thereby perform comparison and verification on the solar irradiation amount of the area on that day and ensure the accuracy of the data detection of the solar irradiation amount. The controller 60 further determines whether the moisture content of the current soil meets the requirements of the plant at present according to the obtained moisture content of the soil and moisture content of the air, and supplements water to the soil timely if not. The controller 60 is further used for driving the transmission device 5 to operate, sending a control signal to the transmission device 5 in a conducting wire electric connection or wireless transmission mode, sending control signals of shutdown, forward conveying and reverse conveying to the first conveying segment 51, the second conveying segment 52 and the third conveying segment 53 of the transmission device 5 respectively, and sending a control signal of ascending or descending to the module lifting mechanism 54. The controller 60 also controls the extension and shrink of the column 11, and when the height of the crop exceeds 3m, sends a control signal of extension to the hydraulic drive mechanism 113 of the column 11, the column telescoping rod 112 extends to adaptively adjust the height of the frame of the greenhouse, and the maximum height does not exceed 10m. The controller 60 also controls the extension and shrink of the telescopic support 23, when photovoltaic module unit 2 is conveyed toward the frame, the controller 60 sends a control signal of extension to the hydraulic drive mechanism 233 of the telescopic support 23, the support telescoping rod 232 extends, and the photovoltaic module unit 2 is unfolded; and when the photovoltaic module unit 2 is conveyed to the module stacking warehouse 3 or the maintenance warehouse 4, the controller 60 sends a control signal of retracting to the hydraulic drive mechanism 233 of the telescopic support 23, the support telescoping rod 232 retracts back, and the photovoltaic module unit 2 is folded. The operation state of each photovoltaic module unit 2 is detected and analyzed regularly, and in the case of an operation fault, the controller 60 sends a control signal of reverse conveying to the second conveying segment 52, sends a control signal of descending to the module lifting mechanism 54 and sends a control signal of reverse conveying to the third conveying segment 53, and the faulty photovoltaic module unit 2 is conveyed from the module placement position to the maintenance warehouse 4 for maintenance.

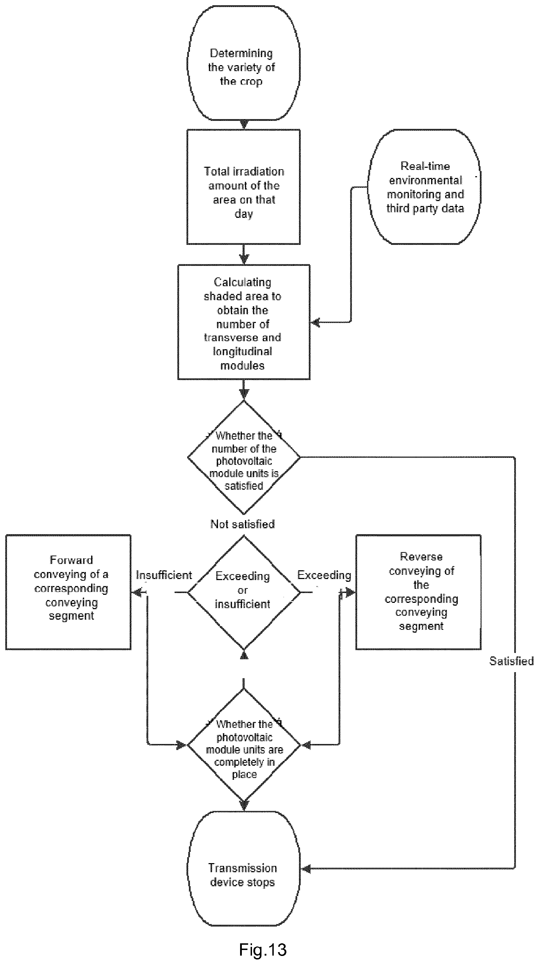

Referring to Fig.13, a control method of the above photovoltaic ecological greenhouse comprises the following steps:
(S1) calculating, by the controller, the required irradiation amount of the plant on that day according to the variety and the growth cycle of the plant;
(S2) obtaining, by the environment detector, the solar irradiation amount of the area on that day, and converting, by the controller, the obtained required irradiation amount into a shaded area of the photovoltaic module unit according to the obtained solar irradiation amount and the received meteorological data of the third party data platform, to obtain the total number of required photovoltaic module units;
(S3) converting, by the controller, the number of rows and the number of columns of the photovoltaic module units according to the obtained total number of the photovoltaic module units;
(S4) determining, by the controller, whether the configuration of the photovoltaic module units disposed on the previous day is in accord with the number of rows and the number of columns obtained in the step S3, if no, placing the redundant photovoltaic module units into the module stacking warehouse, or fetching photovoltaic module units from the module stacking warehouse to supplement the insufficient ones and conveying them to the designated placement positions;
(S5) monitoring, by the soil humidity tester, the moisture content of the soil below the photovoltaic module in real time, obtaining, by the environment detector, the air moisture of the area on that day, determining, by the controller, whether the current moisture content of the soil meets the demand of the plant according to the obtained moisture content of the soil and air moisture, and if the moisture content is insufficient, supplementing water to the soil; and
(S6) detecting the height of the crop, when the height difference between the height of the crop and the photovoltaic module unit is less than a set value, sending, by the controller, a control signal of extension to the hydraulic drive mechanism 113 of the column 11, and driving the column telescoping rod 112 to extend to lift the photovoltaic module unit 2.

Particularly, in the step S4, if the configuration of the photovoltaic module units disposed on the previous day is in accord with the number of rows and the number of columns obtained in the step S3, the transmission device 5 is stopped; and if the configuration of the photovoltaic module units disposed on the previous day is not in accord with the number of rows and the number of columns obtained in the step S3, the control mechanism sends a control signal to drive the transmission device 5 to operate. Particularly, if the number of the photovoltaic module units disposed on the previous day exceeds the number of rows and/or the number of columns obtained in the step S3, the controller 60 drives the second conveying segment 52 and the first conveying segment 51 to perform reverse conveying and drives the module lifting mechanism 54 to descend to convey the redundant photovoltaic module units from the placement positions to the module stacking warehouse 3; and if the number of the photovoltaic module units disposed on the previous day is less than the number of rows and/or the number of columns obtained in the step S3, the controller 60 controls the first conveying segment 51 and the second conveying segment 52 to perform forward conveying to convey photovoltaic module units from the module stacking warehouse 3 to the designated placement positions to supplement the insufficient ones. In addition, the controller 60 further controls the extension and shrink of the telescopic support 23, and when the photovoltaic module unit 2 is conveyed toward the frame, the controller 60 sends a control signal of extension to the hydraulic drive mechanism 113 of the telescopic support 23, the support telescoping rod 232 extends, and the photovoltaic module unit 2 is unfolded; and when the photovoltaic module unit 2 is conveyed to the module stacking warehouse or the maintenance warehouse 4, the controller 60 sends a control signal of retracting to the hydraulic drive mechanism 113 of the telescopic support 23, the support telescoping rod 232 retracts back, and the photovoltaic module unit 2 is folded.

## Claims

1. A photovoltaic module unit (2) for a photovoltaic ecological greenhouse, comprising: a support (21) for mounting and sliding on a supporting frame (1) of a photovoltaic power station or a photovoltaic ecological greenhouse; and a photovoltaic module (20) provided on the said support (21), wherein the support (21) comprises a bottom support (22) and a vertical telescopic support (23) provided on a side of the bottom support (22), and a side of the photovoltaic module (20) and an upper end of the telescopic support (23) are slidably and rotatably connected, and the other side of the photovoltaic module (20) and the other side of the bottom support (22) are rotatably connected, **characterized in that**
the photovoltaic module unit (2) further comprises a conveying mechanism for conveying the electric energy generated by the photovoltaic module (20) to said supporting frame (1), said conveying mechanism is provided with a first contact point (2210) for contacting and electrically connecting the supporting frame (1), wherein the first contact point (2110) is
- provided at the lower part of the support (21),
- electrically connected with the photovoltaic module (20), and
- designed to match with a second contact point (160) of a sliding slot (16) of the supporting frame (1).

2. The photovoltaic module unit (2) according to claim 1, **characterized in that** the telescopic support (23) comprises a support telescoping sleeve (231) fixedly connected to the bottom support (22), a support telescoping rod (232) vertically slidably connected to the support telescoping sleeve (231), and a hydraulic drive mechanism of the telescopic (233) provided between the support telescoping sleeve (231) and the support telescoping rod (232), and the support telescoping rod (232) is connected with the photovoltaic module (20).

3. The photovoltaic module (2) unit according to claim 2, **characterized in that** the support telescoping rod (232) is connected with the photovoltaic module (20) through a second-stage support telescoping rod, the second-stage support telescoping rod (?) is connected with the support telescoping rod (232) in a vertically slidable manner, and a second-stage hydraulic drive mechanism is disposed between the second-stage support telescoping rod and the support telescoping rod (232).

4. The photovoltaic module unit (2) according to claim 2, **characterized in that** the hydraulic drive mechanism is a hydraulic oil cylinder.

5. The photovoltaic module unit (2) according to claim 1, **characterized in that** the conveying mechanism further comprises a hollow insulating shell (210) fixedly connected to the lower part of the support (21), and a metal contact (211) movably disposed in the insulating shell (210), the first contact point (2110) is formed on one end of the metal contact (211), the other end of the metal contact (211) is electrically connected with the photovoltaic module (20) through a first conducting wire (212), a through hole for enabling the first contact point (2110) to protrude is formed at one end of the insulating shell (210), a through hole for enabling the first conducting wire (212) to protrude is formed at the other end of the insulating shell (210), and an elastic member for providing an elastic force for enabling the contact to protrude is disposed between the insulating shell (210) and the metal contact (211).

6. A photovoltaic ecological greenhouse, comprising: a supporting frame (1) disposed on the ground to form a support, and a plurality of photovoltaic module units (2) disposed on the supporting frame (1), **characterized in that** the photovoltaic module unit (2) is the photovoltaic module unit (2) according to any one of claims 1-5.

7. The photovoltaic ecological greenhouse according to claim 6, **characterized in that** the supporting frame (1) is provided with a frame for mounting the photovoltaic module unit (2), and the bottom support (22) of the photovoltaic module unit (2) is slidably and detachably disposed on the frame.

8. The photovoltaic ecological greenhouse according to claim 7, **characterized in that** the frame is provided with guide rails (12,13), a guide groove (120,130) is provided on the guide rail (12,13), a slider (220) is disposed on the lower part of the bottom support (22), and the slider (220) is slidably inserted into the guide groove (120,130).

9. The photovoltaic ecological greenhouse according to claim 8, wherein the conveying mechanism comprises a second contact point (160) provided on the guide rail (12,13), the second contact point (160) is electrically connected with a second conducting wire (17), a sliding slot (16) is provided on the guide rail (12,13), and the second contact point (160) is provided on the bottom of the sliding slot (16), and the conveying mechanism further comprises a hollow insulating shell (210) fixedly disposed on the lower part of the support (21), and a metal contact (211) movably disposed in the insulating shell (210), the first contact point (2110) is formed on one end of the metal contact (211), the other end of the metal contact (211) is electrically connected with the first conducting wire (212), a through hole for enabling the first contact point (2110) to protrude is formed at one end of the insulating shell (210), a through hole for enabling the first conducting wire (212) to protrude is formed at the other end of the insulating shell (210), an elastic member for driving the metal contact (211) to move is disposed between the metal contact (211) and the insulating shell (210), and when the photovoltaic module unit (2) is installed in place, the metal contact (211) is inserted into the sliding slot (16), and the first contact point (2110) comes into contact and electrical connection with the second contact point (160).

## Patentansprüche

1. Photovoltaikmoduleinheit (2) für ein photovoltaisches ökologisches Gewächshaus, die Folgendes umfasst: einen Träger (21) zum Montieren und Verschieben auf einem Tragrahmen (1) eines photovoltaischen Kraftwerks oder eines photovoltaischen ökologischen Gewächshauses; und ein Photovoltaikmodul (20), das auf dem Träger (21) vorgesehen ist, wobei der Träger (21) einen Bodenträger (22) und einen vertikalen Teleskopträger (23), der an einer Seite des Bodenträgers (22) vorgesehen ist, umfasst und eine Seite des Photovoltaikmoduls (20) und ein oberes Ende des Teleskopträgers (23) verschiebbar und drehbar verbunden sind und die andere Seite des Photovoltaikmoduls (20) und die andere Seite des Bodenträgers (22) drehbar verbunden sind, **dadurch gekennzeichnet, dass**
die Photovoltaikmoduleinheit (2) ferner einen Transportmechanismus zum Transportieren der elektrischen Energie, die durch das Photovoltaikmodul (20) erzeugt worden ist, zu dem Tragrahmen (1) umfasst, wobei der Transportmechanismus mit einem ersten Kontaktpunkt (2210) zum Kontaktieren und elektrischen Verbinden des Tragrahmens (1) versehen ist, wobei der erste Kontaktpunkt (2110)
- an dem unteren Teil des Trägers (21) vorgesehen ist,
- mit dem Photovoltaikmodul (20) elektrisch verbunden ist und
- ausgelegt ist, um an einen zweiten Kontaktpunkt (160) eines Verschiebeschlitzes (16) des Tragrahmens (1) angepasst zu sein.

2. Photovoltaikmoduleinheit (2) nach Anspruch 1, **dadurch gekennzeichnet, dass** der Teleskopträger (23) eine Trägerteleskophülse (231), die mit dem Bodenträger (22) fest verbunden ist, eine Trägerteleskopstange (232), die mit der Trägerteleskophülse (231) vertikal verschiebbar verbunden ist, und einen hydraulischen Antriebsmechanismus der teleskopischen (233), der zwischen der Trägerteleskophülse (231) und der Trägerteleskopstange (232) vorgesehen ist, umfasst, und die Trägerteleskopstange (232) mit dem Photovoltaikmodul (20) verbunden ist.

3. Photovoltaikmoduleinheit (2) nach Anspruch 2, **dadurch gekennzeichnet, dass** die Trägerteleskopstange (232) mit dem Photovoltaikmodul (20) durch eine Trägerteleskopstange der zweiten Stufe verbunden ist, wobei die
Trägerteleskopstange (?) der zweiten Stufe mit der Trägerteleskopstange (232) vertikal verschiebbar verbunden ist und ein hydraulischer Antriebsmechanismus der zweiten Stufe zwischen der Trägerteleskopstange der zweiten Stufe und der Trägerteleskopstange (232) angeordnet ist.

4. Photovoltaikmoduleinheit (2) nach Anspruch 2, **dadurch gekennzeichnet, dass** der hydraulische Antriebsmechanismus ein Hydraulikölzylinder ist.

5. Photovoltaikmoduleinheit (2) nach Anspruch 1, **dadurch gekennzeichnet, dass** der Transportmechanismus ferner eine hohle isolierende Hülle (210), die mit dem unteren Teil des Trägers (21) fest verbunden ist, und einen Metallkontakt (211), der in der isolierenden Hülle (210) beweglich vorgesehen ist, umfasst, wobei der erste Kontaktpunkt (2110) an einem Ende des Metallkontakts (211) gebildet ist, das andere Ende des Metallkontakts (211) mit dem Photovoltaikmodul (20) durch einen ersten leitenden Draht (212) verbunden ist, ein Durchgangsloch, um dem ersten Kontaktpunkt (2110) zu ermöglichen, herauszuragen, an einem Ende der isolierenden Hülle (210) gebildet ist, ein Durchgangsloch, um dem ersten leitenden Draht (212) zu ermöglichen, herauszuragen, an dem anderen Ende der isolierenden Hülle (210) gebildet ist und ein elastisches Element zum Bereitstellen einer elastischen Kraft, um dem Kontakt zu ermöglichen, herauszuragen, zwischen der isolierenden Hülle (210) und dem Metallkontakt (211) angeordnet ist.

6. Photovoltaisches ökologisches Gewächshaus, das Folgendes umfasst: einen Tragrahmen (1), der auf dem Boden angeordnet ist, um einen Träger zu bilden, und mehrere Photovoltaikmoduleinheiten (2), die auf dem Tragrahmen (1) angeordnet sind, **dadurch gekennzeichnet, dass** die Photovoltaikmoduleinheit (2) die Photovoltaikmoduleinheit (2) nach einem der Ansprüche 1 - 5 ist.

7. Photovoltaisches ökologisches Gewächshaus nach Anspruch 6, **dadurch gekennzeichnet, dass** der Tragrahmen (1) mit einem Rahmen zum Montieren der Photovoltaikmoduleinheit (2) versehen ist und der Bodenträger (22) der Photovoltaikmoduleinheit (2) verschiebbar und lösbar auf dem Rahmen angeordnet ist.

8. Photovoltaisches ökologisches Gewächshaus nach Anspruch 7, **dadurch gekennzeichnet, dass** der Rahmen mit Führungsschienen (12, 13) versehen ist, eine Führungsnut (120, 130) auf den Führungsschienen (12, 13) vorgesehen ist, ein Schieber (220) auf dem unteren Teil des Bodenträgers (22) angeordnet ist und der Schieber (220) in die Führungsnut (120, 130) verschiebbar eingesetzt wird.

9. Photovoltaisches ökologisches Gewächshaus nach Anspruch 8, wobei der Transportmechanismus einen zweiten Kontaktpunkt (160) umfasst, der auf der Führungsschiene (12, 13) vorgesehen ist, wobei der zweite Kontaktpunkt (160) mit einem zweiten leitenden Draht (17) elektrisch verbunden ist, ein Verschiebeschlitz (16) auf der Führungsschiene (12, 13) vorgesehen ist, der zweite Kontaktpunkt (160) auf dem Boden des Verschiebeschlitzes (16) vorgesehen ist und der Transportmechanismus ferner eine hohle isolierende Hülle (210), die an dem unteren Teil des Trägers (21) fest angeordnet ist, und einen Metallkontakt (211), der in der isolierenden Hülle (210) beweglich angeordnet ist, umfasst, wobei der erste Kontaktpunkt (2110) an einem Ende des Metallkontakts (211) gebildet ist, das andere Ende des Metallkontakts (211) mit dem ersten leitenden Draht (212) elektrisch verbunden ist, ein Durchgangsloch, um dem ersten Kontaktpunkt (2110) zu ermöglichen, herauszuragen, an einem Ende der isolierenden Hülle (210) gebildet ist, ein Durchgangsloch, um dem ersten leitenden Draht (212) zu ermöglichen, herauszuragen, an dem anderen Ende der isolierenden Hülle (210) gebildet ist, ein elastisches Element, um den Metallkontakt (211) anzutreiben, sich zu bewegen, zwischen dem Metallkontakt (211) und der isolierenden Hülle (210) angeordnet ist und dann, wenn die Photovoltaikmoduleinheit (2) an der Stelle installiert wird, der Metallkontakt (211) in den Verschiebeschlitz (16) eingesetzt wird und der erste Kontaktpunkt (2110) in Kontakt und in elektrische Verbindung mit dem zweiten Kontaktpunkt (160) gelangt.

## Revendications

1. Unité (2) de module photovoltaïque pour une serre écologique photovoltaïque, comportant:
un support (21) destiné à se monter et à coulisser sur une ossature porteuse (1) d'une centrale électrique photovoltaïque ou d'une serre écologique photovoltaïque; et un module photovoltaïque (20) placé sur ledit support (21), le support (21) comportant un support inférieur (22) et un support télescopique vertical (23) placé sur un côté du support inférieur (22), et un côté du module photovoltaïque (20) et une extrémité supérieure du support télescopique (23) étant liés de façon coulissante et pivotante, et l'autre côté du module photovoltaïque (20) et l'autre côté du support inférieur (22) étant liés de façon pivotante, **caractérisée en ce que**
l'unité (2) de module photovoltaïque comporte en outre un mécanisme de transfert servant à transférer l'énergie électrique générée par le module photovoltaïque (20) à ladite ossature porteuse (1), ledit mécanisme de transfert étant muni d'un premier point (2210) de contact servant à entrer en contact avec et à raccorder électriquement l'ossature porteuse (1), le premier point (2110) de contact étant
- placé à la partie inférieure du support (21),
- relié électriquement au module photovoltaïque (20), et
- conçu pour s'adapter à un second point (160) de contact d'une fente (16) de coulissement de l'ossature porteuse (1).

2. Unité (2) de module photovoltaïque selon la revendication 1, **caractérisée en ce que** le support télescopique (23) comporte un manchon télescopique (231) de support en liaison complète avec le support inférieur (22), une tige télescopique (232) de support liée de façon verticalement coulissante au manchon télescopique (231) de support, et un mécanisme d'entraînement hydraulique du télescopique (233) placé entre le manchon télescopique (231) de support et la tige télescopique (232) de support, et la tige télescopique (232) de support est liée au module photovoltaïque (20).

3. Unité (2) de module photovoltaïque selon la revendication 2, **caractérisée en ce que** la tige télescopique (232) de support est liée au module photovoltaïque (20) par l'intermédiaire d'une tige télescopique de support de second étage, la tige télescopique (?) de support de second étage est liée à la tige télescopique (232) de support de manière verticalement coulissante, et un mécanisme d'entraînement hydraulique de second étage est disposé entre la tige télescopique de support de second étage et la tige télescopique (232) de support.

4. Unité (2) de module photovoltaïque selon la revendication 2, **caractérisée en ce que** le mécanisme d'entraînement hydraulique est un vérin à huile hydraulique.

5. Unité (2) de module photovoltaïque selon la revendication 1, **caractérisée en ce que** le mécanisme de transfert comporte en outre une coque isolante creuse (210) en liaison complète avec la partie inférieure du support (21), et un contact métallique (211) disposé de façon mobile dans la coque isolante (210), le premier point (2110) de contact est formé sur une extrémité du contact métallique (211), l'autre extrémité du contact métallique (211) est reliée électriquement au module photovoltaïque (20) par l'intermédiaire d'un premier fil conducteur (212), un trou débouchant servant à permettre au premier point (2110) de contact de dépasser est formé à une extrémité de la coque isolante (210), un trou débouchant servant à permettre au premier fil conducteur (212) de dépasser est formé à l'autre extrémité de la coque isolante (210), et un élément élastique servant à fournir une force élastique pour permettre au contact de dépasser est disposé entre la coque isolante (210) et le contact métallique (211).

6. Serre écologique photovoltaïque, comportant: une ossature porteuse (1) disposée sur le sol pour former un support, et une pluralité d'unités (2) de modules photovoltaïques disposées sur l'ossature porteuse (1), **caractérisée en ce que** l'unité (2) de module photovoltaïque est l'unité (2) de module photovoltaïque selon l'une quelconque des revendications 1 à 5.

7. Serre écologique photovoltaïque selon la revendication 6, **caractérisée en ce que** l'ossature porteuse (1) est munie d'une ossature servant à monter l'unité (2) de module photovoltaïque, et le support inférieur (22) de l'unité (2) de module photovoltaïque est disposé de façon coulissante et détachable sur l'ossature.

8. Serre écologique photovoltaïque selon la revendication 7, **caractérisée en ce que** l'ossature est munie de rails (12, 13) de guidage, une rainure (120, 130) de guidage est réalisée sur le rail (12, 13) de guidage, un curseur (220) est disposé sur la partie inférieure du support inférieur (22), et le curseur (220) est inséré de façon coulissante dans la rainure (120, 130) de guidage.

9. Serre écologique photovoltaïque selon la revendication 8, le mécanisme de transfert comportant un second point (160) de contact placé sur le rail (12, 13) de guidage, le second point (160) de contact étant relié électriquement à un second fil conducteur (17), une fente (16) de coulissement étant réalisée sur le rail (12, 13) de guidage, et le second point (160) de contact étant placé sur le fond de la fente (16) de coulissement, et le mécanisme de transfert comportant en outre une coque isolante creuse (210) disposée de façon fixe sur la partie inférieure du support (21), et un contact métallique (211) disposé de façon mobile dans la coque isolante (210), le premier point (2110) de contact étant formé sur une extrémité du contact métallique (211), l'autre extrémité du contact métallique (211) étant reliée électriquement au premier fil conducteur (212), un trou débouchant pour permettre au premier point (2110) de contact de dépasser étant formé à une extrémité de la coque isolante (210), un trou débouchant pour permettre au premier fil conducteur (212) de dépasser étant formé à l'autre extrémité de la coque isolante (210), un élément élastique servant à amener le contact métallique (211) à se déplacer étant disposé entre le contact métallique (211) et la coque isolante (210), et lorsque l'unité (2) de module photovoltaïque est installée en place, le contact métallique (211) étant inséré dans la fente (16) de coulissement, et le premier point (2110) de contact entrant en contact et en liaison électrique avec le second point (160) de contact.
